Europäisches Patentamt

European Patent Office

Office européen des brevets

(11) Veröffentlichungsnummer: **0 167 841**

**A2**

(12) **EUROPÄISCHE PATENTANMELDUNG**

(21) Anmeldenummer: 85107044.1

(22) Anmeldetag: 07.06.85

(51) Int. Cl.⁴: **B 24 B 9/00**

(30) Priorität: 06.07.84 DE 3424918

(43) Veröffentlichungstag der Anmeldung:
15.01.86 Patentblatt 86/3

(84) Benannte Vertragsstaaten:
CH DE FR GB IT LI

(71) Anmelder: Maschinenfabrik Gehring GmbH & Co. KG
Gehringstrasse 28
D-7302 Ostfildern 2(DE)

(72) Erfinder: Grimm, Hans, Dipl.-Ing. (FH)
Farnweg 12
D-7300 Esslingen 1(DE)

(74) Vertreter: Jackisch, Walter, Dipl.-Ing.
Menzelstrasse 40
D-7000 Stuttgart 1(DE)

(54) Verfahren und Vorrichtung zum Entgraten einer inneren Kante einer Bohrung oder dergleichen eines Werkstückes.

(57) Bei einem Verfahren zum Entgraten einer inneren Kante einer Werkstückbohrung (5) wird das Werkzeug (2) in die Bohrung (5) eingeführt und mit hoher Drehzahl rotierend angetrieben, wobei ihm eine Taumelbewegung überlagert wird. Es kann aber auch nur das Werkzeug (2) rotierend angetrieben werden und dem Werkstück (6) eine Taumelbewegung erteilt werden. Zur Durchführung dieses Verfahrens ist das Werkzeug (2) als Schleifstift ausgebildet, der von einer Schleifspindeleinheit (1) gehalten ist, die mit einem Exzenterantrieb (15) antriebsverbunden ist. Die Schleifspindeleinheit (1) ist vorzugsweise allseitig schwenkbar gelagert. Bei dem Verfahren beschreibt das Werkzeug (2) bzw. das Werkstück (6) in der Werkstückbohrung (5) eine Taumelbewegung mit einer zur Bohrungsachse (10) konzentrischen Kreisbahn, deren Durchmesser in Richtung auf das freie Bohrungsende zunimmt. Dadurch wird der zu bearbeitende Grat einfach und sehr genau abgetragen, ohne daß die Gefahr besteht, daß der Grat in die Bohrung (5) bewegt wird. Außerdem ist das Werkzeug (2) sehr einfach ausgebildet, so daß es eine lange Einsatzdauer hat.

EP 0 167 841 A2

**Dipl.-Ing. W. Jackisch**
Menzelstr. 40, 7000 Stuttgart 1

Maschinenfabrik Gehring
Gesellschaft mit beschränkter
Haftung & Co. Kommanditgesellschaft
Gehringstr. 28

7302 Ostfildern 2

**0167841**
A 1-86 653/soi
05.06.1985

1

## Verfahren und Vorrichtung zum Entgraten einer inneren Kante einer Bohrung oder dgl. eines Werkstückes

Die Erfindung betrifft ein Verfahren und eine Vorrichtung nach dem Oberbegriff des Anspruches 1 bzw. 10.

An den Bohrungsrändern sind häufig Grate vorhanden, die mit den bisher bekannten Verfahren und Werkzeugen oft nicht zufriedenstellend entfernt werden können. Dies gilt insbesondere in den Fällen, in denen diese Grate schwer zugänglich sind, zum Beispiel an einer Mündungskante einer in eine Querbohrung mündenden Bohrung eines Werkstückes. Zum Entfernen solcher Grate werden Bürstwerkzeuge verwendet, die durch die Bohrung hindurch bewegt werden und dabei den Grat abbürsten. Dabei kann der Grat leicht in das Innere der Querbohrung gebürstet werden, wo er unter Umständen noch mehr stört als in der Bohrung.

Um diesen Nachteil zu vermeiden, werden auch Werkzeuge mit einer federnden Spreizeinrichtung verwendet. Sie haben einen mit einer Schleiffläche versehenen Kopf, der durch eine Feder aufgespreizt wird, die ein vorderes Schaftteil bildet. Diese Werkzeuge werden so weit in die Bohrung eingeführt, daß sie den zu entfernenden Grat hintergreifen. Danach wird das Werkzeug aus der Bohrung zurückgezogen, wobei der Grat entfernt und in das Bohrungsinnere gezogen wird.

- 5 -

Diese Werkzeuge haben infolge der kleinen Schleifffläche ihres Werkzeugkopfes nur eine relativ geringe Standzeit, was sich besonders bei kleinen Werkzeugen, die zum Entgraten von Bohrungen mit kleinem Bohrungsdurchmesser verwendet werden, sehr nachteilig auswirkt. Ferner hat sich gezeigt, daß die zum Aufspreizen des Werkzeugkopfes vorgesehene Feder relativ rasch erlahmt, so daß der Grat nicht mehr zuverlässig entfernt werden kann.

Sowohl die Bürstwerkzeuge als auch die aufspreizbaren Werkzeuge sind daher für den Einsatz in der Serienfertigung wenig geeignet.

Der Erfindung liegt die Aufgabe zugrunde, ein Verfahren und eine Vorrichtung der eingangs genannten Art so auszubilden, daß mit ihr Grate von Bohrungen oder dgl. sicher entfernt werden können und eine hohe Standzeit gewährleistet ist.

Diese Aufgabe wird erfindungsgemäß mit den kennzeichnenden Merkmalen der Ansprüche 1 und 10 gelöst.

Bei dem erfindungsgemäßen Verfahren beschreibt das Werkzeug bzw. das Werkstück nach dem Einfahren des Werkzeuges in die zu entgratende Werkstückbohrung infolge der erfindungsgemäßen Taumelbewegung eine zur Bohrungsachse konzentrische Kreisbahn, deren Durchmesser in Richtung auf das freie Bohrungsende zunimmt. Dadurch kann der zu bearbeitende Grat auf einfache Weise und sehr genau und vollständig abgetragen werden, ohne daß die Gefahr besteht, daß der Grat in die Bohrung bewegt wird. Das Werkzeug kann infolge der erfindungsgemäßen Ausbildung konstruktiv einfach, beispielsweise als Schleifstift, ausgebildet sein, so daß ein aufwendiger Aufspreizmechanismus entfällt und das Werkzeug eine lange Einsatzdauer hat.

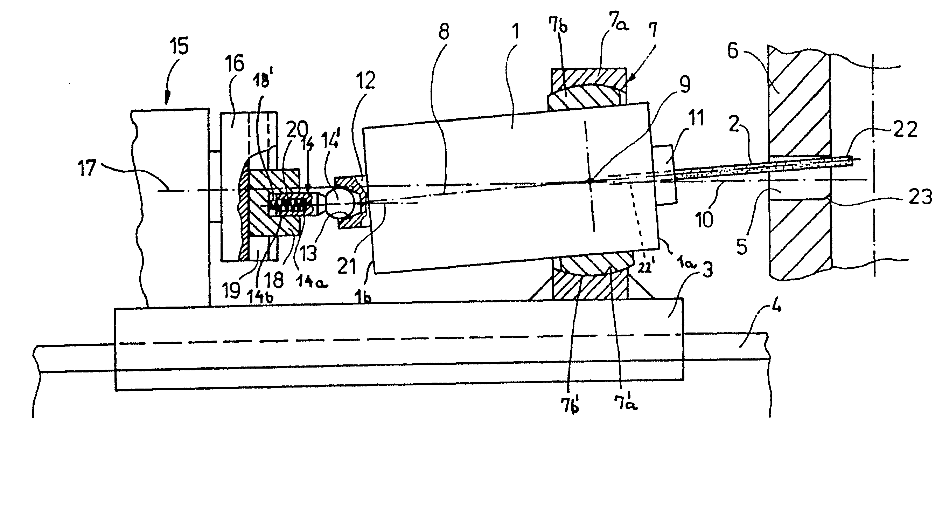

Weitere Merkmale der Erfindung ergeben sich aus den weiteren Ansprüchen, der Beschreibung und der Zeichnung.

Die Erfindung wird nachstehend anhand eines in der Zeichnung dargestellten Ausführungsbeispieles näher beschrieben.

In der Zeichnung ist schematisch eine erfindungsgemäße Vorrichtung dargestellt, mit der ein Grat einer Bohrung eines Werkstückes entfernt werden kann.

Die in der Zeichnung dargestellte Vorrichtung weist eine an sich bekannte Schleifspindeleinheit 1 auf, in der ein als Schleifstift 2 ausgebildetes Werkzeug befestigt ist. Es ist mit einem Ende 22' in eine stirnseitige Bohrung einer Schleifspindel 11 gesteckt und dort mit bekannten Mitteln, wie eine Spannzange, gehalten. Die Schleifspindel 11 wird mit hoher Drehzahl über eine (nicht dargestellte) Antriebsturbine rotierend angetrieben. Die Schleifspindeleinheit 1 ist auf einem Schlitten 3 gelagert, der in bekannter Weise, zum Beispiel mittels einer (nicht dargestellten) Kolben-Zylindereinrichtung, auf einer Führung 4 so verschiebbar ist, daß der Schleifstift 2 durch Verschieben des Schlittens 3 in die zu entgratende Bohrung 5 des fest angeordneten Werkstückes 6 verfahren werden kann.

Die Schleifspindeleinheit 1 ist über ein Kardan-oder Kugelgelenk 7 mit dem Schlitten 3 verbunden, das aus einem starr auf dem Schlitten befestigten äußeren Gleitring 7a und einem auf dem Außenmantel der Schleifspindeleinheit befestigten inneren Gleitring 7b besteht, deren Gleitflächen 7a' und 7b' in Längsrichtung der Schleifspindel sphärisch gekrümmt sind. Über das Kugel- oder Kardangelenk 7 ist die Schleifspindeleinheit 1 nach allen Seiten gegenüber dem
Schlitten kippbar. Das Kugel- oder Kardangelenk 7 ist so
angeordnet, daß sein Gelenkpunkt 9 im Schnittpunkt der
Längsachse 8 der Schleifspindeleinheit 1 mit der Bohrungsachse 10 des Werkstückes 6 und vorzugsweise nahe der dem
Werkstück zugewandten Stirnseite 1a der Schleifspindeleinheit 1 liegt.

Die Schleifspindeleinheit 1 weist an ihrer vom Schleifstift 2 abgewandten Stirnseite 1b einen stark verjüngten
zapfenartigen Ansatz 12 auf, der eine Ausnehmung 13 aufweist.
Die im Axialschnitt trapezförmige Ausnehmung 13 erweitert
sich nach außen und dient zur Aufnahme eines Kugelkopfes
14' eines Mitnehmerbolzens 14 eines Exzenterantriebes 15.
Er ist fest auf dem Schlitten 3 angeordnet und weist eine
drehbare Scheibe 16 auf, deren Rotationsachse 17 mit der
Bohrungsachse 10 des Werkstückes 6 fluchtet. Die Scheibe 16
weist eine vorzugsweise diametral angeordnete Führungsnut 19 auf, in der ein Querschlitten 18 in radialer Richtung
durch an sich bekannte (nicht dargestellte) Verstellmittel,
wie ein Keilgetriebe, verstellbar gehalten ist. Der Querschlitten 18 hat eine zur Schleifspindeleinheit 1 hin
offene, vorzugsweise zentrale Ausnehmung 18', in die das
vom Kugelkopf 14' abgewandte schaftartige Ende 14b des
Mitnehmerbolzens 14 ragt. Dieses weist ebenfalls eine vorzugsweise zentrale Sacklochbohrung 14a auf, in der vorzugsweise eine Druckfeder 20 angeordnet ist, die mit ihrem
einen Ende aus der Sacklochbohrung ragt und sich am Boden
der Ausnehmung 18' abstützt.

Der Querschlitten 18 liegt beim Betrieb der Vorrichtung
außermittig zur Scheibe 16, so daß der Mitnehmerbolzen 14
entsprechend dem jeweiligen Abstand der Rotationsachse 17
von der Längsachse 21 des Mitnehmerbolzens 14 bei der Rotation der Scheibe 16 eine mehr oder weniger große Exzenterbewegung ausführt. Zum Einstellen des gewünschten Achsabstandes ist der Mitnehmerbolzen 14 mit dem Querschlitten 18 in der Führungsnut 19 der Scheibe 16 verschiebbar. Der Mitnehmerbolzen 14 ist im Querschlitten 18 axial verschiebbar geführt und wird durch die Druckfeder 20 in die Ausnehmung 13 der Schleifspindel 1 gedrückt, wodurch die auftretenden Längenänderungen beim Verschwenken der Schleifspindeleinheit 1 um den Gelenkpunkt 9 selbsttätig ausgeglichen werden.

Vor Inbetriebnahme der Vorrichtung steht der Mitnehmerbolzen 14 zentrisch, so daß seine Längsachse 21 mit der Rotationsachse 17 der Scheibe 16 fluchtet. Die Schleifspindeleinheit 1 ist hierbei so im Schlitten 3 gehalten, daß ihre Längsachse 8 mit der Bohrungsachse 10 des zu entgratenden Werkstückes fluchtet. Danach wird der Schleifstift 2, dessen Durchmesser wesentlich kleiner ist als der Bohrungsdurchmesser der Werkstückbohrung 5, durch Verfahren des Schlittens 3 in die Bohrung 5 so weit eingeführt, daß sein freies Ende 22 den zu entfernenden Grat 23 geringfügig überragt. Dann wird der Schleifstift 2 mit hoher Drehzahl, z.B. mit 50.000 bis 200.000 U/min. angetrieben und gleichzeitig der Exzenterantrieb eingeschaltet. Die Scheibe 16 beginnt dann mit niedriger Drehzahl zu rotieren, und der Mitnehmerbolzen 14 wird über den Querschlitten 18 radial nach außen bis zur gewünschten Exzentrizität verstellt. Die Schleifspindeleinheit 1 mit dem Schleifstift 2 wird mittels der Scheibe 16 und dem Mitnehmerbolzen 14 exzentrisch angetrieben, wodurch die Schleifspindel und der Schleifstift eine Taumelbewegung um den Gelenkpunkt 9 ausführen.

Die Größe der radialen Verstellung des Mitnehmerbolzens 14 bestimmt die Größe der Taumelbewegung. Diese wird

so gewählt, daß der hochtourig sich drehende Schleifstift 2 in Schleifkontakt mit der zu entgratenden inneren
Kante der Bohrung 5 kommt, wobei der Grat 23 einwandfrei
abgeschliffen wird.

Vorteilhaft wird der Schleifstift 2 während des Entgratens
der Bohrungskante ständig in Richtung der Bohrungsachse 10
um ein kurzes Stück hin und her bewegt. Hierzu wird der
Schlitten 3 über einen (nicht dargestellten) Hubantrieb verstellt. Der Schleifstift 2 ist insbesondere bei kleinen
Bohrungsdurchmessern vorzugsweise als federharter Stahldraht ausgebildet, der über seine ganze Länge mit einem
Schleifmittel, zum Beispiel Diamant- oder Bohrnitrid in
geeigneter Körnung, beschichtet ist.

Zur Erhöhung des Schleifdruckes wird die Taumelbewegung so
vergrößert, daß sich der Schleifstift 2, beim Anlegen an die
zu entgratende Kante 23 der Bohrung 5 leicht elastisch durchbiegt.

Die beschriebene Vorrichtung hat eine lange Einsatzdauer,
da das vordere Ende des Schleifstiftes 2 mit einer durch eine
geeignete (nicht dargestellte) Abschereinrichtung selbsttätig abgetrennt und der Schleifstift entsprechend nachgestellt wird, wenn sein Ende nach längerer Einsatzdauer
abgenutzt ist. Vorzugsweise wird ein sehr langer, auf einer
Spule aufgewickelter Schleifdraht als Schleifstift verwendet,
der bei Bedarf mit einer (nicht dargestellten) bekannten
Abwickel- und Transporteinrichtung von der Rolle abgewickelt
und der Schleifspindel zugeführt wird. Dadurch ist über eine
lange Einsatzdauer ein störungsfreier Betrieb gewährleistet,
so daß sich die Vorrichtung für eine Grosserienfertigung besonders eignet.

In besonderen Fällen kann es auch vorteilhaft sein, den
Schleifstift 2 nur rotierend anzutreiben und die Taumelbewegung dem Werkstück zu erteilen, wobei sowohl der Schleifstift als auch das Werkstück die überlagerte axiale Hubbewegung ausführen können  Es ist aber auch möglich, das
Werkstück 6 rotierend und taumelnd anzutreiben, während
der Schleifstift 2 feststeht oder rotiert.

Patentanwalt
Dipl.-Ing. W. Jackisch
Menzelstr. 40, 7000 Stuttgart 1

Maschinenfabrik Gehring
Gesellschaft mit beschränkter
Haftung & Co.Kommanditgesellschaft

**0167841**

A 1-86 653/soi
05.06.1985

_ 1 _

## Ansprüche

1. Verfahren zum Entfernen eines Grates einer inneren
   Kante einer Bohrung oder dergleichen eines Werkstückes, bei dem ein Werkzeug in die Bohrung eingeführt und dann in dieser über den zu entfernenden Grat hinwegbewegt wird,
   dadurch gekennzeichnet, daß das Werkzeug (2) und/oder
   das Werkstück (6) mit hoher Drehzahl rotierend und
   zusätzlich mindestens eines dieser Teile (2,6) taumelnd angetrieben wird (werden).

2. Verfahren nach Anspruch 1,
   dadurch gekennzeichnet, daß das Werkzeug (2) mit
   hoher Drehzahl rotierend angetrieben und ihm eine
   Taumelbewegung und eine axiale Hubbewegung überlagert
   werden.

3. Verfahren nach Anspruch 1,
   dadurch gekennzeichnet, daß das Werkzeug (2) mit
   hoher Drehzahl rotierend angetrieben und dem Werkstück (6) eine Taumelbewegung erteilt und ihm eine
   axiale Hubbewegung überlagert werden.

4. Verfahren nach einem der Ansprüche 1 bis 3,
   dadurch gekennzeichnet, daß die Taumelbewegung des
   Werkzeuges (2) und/oder des Werkstückes (6) an die
   Größe des zu entgratenden Bohrungsrandes angepaßt
   wird, derart, daß das Werkzeug (2) in Schleifkontakt mit dem zu entfernenden Grat (23) steht, und
   daß die Taumelbewegung des Werkzeuges (2) so groß
   ist, daß es sich während des Entgratens leicht
   elastisch durchbiegt.

5. Verfahren nach einem der Ansprüche 1 bis 4,
dadurch gekennzeichnet, daß das Werkzeug (2) mit
einem vorbestimmten Schneiddruck am Grat (23)
anliegt und von einer Rolle abgespult und einer ihn
haltenden Schleifspindeleinheit (1) zugeführt wird,
und daß das freie Ende des Werkzeuges (2) nach einer
bestimmten Abnutzung von einer Abschereinrichtung
automatisch abgetrennt und selbsttätig nachgeschoben
wird.

6. Vorrichtung zur Durchführung des Verfahrens nach einem
der Ansprüche 1 bis 5,
dadurch gekennzeichnet, daß das Werkzeug (2) ein Schleifstift ist, der von einer allseitig schwenkbar gelagerten
Schleifspindeleinheit (1) gehalten ist, die mit einem
Exzenterantrieb (15) antriebsverbunden ist.

7. Vorrichtung nach Anspruch 6,
dadurch gekennzeichnet, daß die Schleifspindeleinheit
(1) und der Exzenterantrieb (15) auf einem verfahrbaren Schlitten (3) angeordnet sind, daß die Schleifspindeleinheit (1) über ein Gelenk (7) auf dem
Schlitten (3) gelagert ist, und daß der Gelenkpunkt
(9) des Gelenkes (7) etwa im Schnittpunkt der Längsachse (8) der Schleifspindeleinheit (1) mit der Bohrungsachse (10) des Werkstückes (6) und nahe der dem Werkstück zugewandten Stirnseite (1a) der Schleifspindeleinheit (1) angeordnet ist.

8. Vorrichtung nach einem der Ansprüche 6 und 7,
dadurch gekennzeichnet, daß an dem der Schleifspindel
(11) gegenüberliegenden Ende (12) der Schleifspindeleinheit (1) eine stirnseitige, im Axialschnitt etwa
trapezförmige Ausnehmung (13) vorgesehen ist, in die
ein Kugelkopf des Mitnehmerbolzens (14) des Exzenterantriebs (15) ragt, daß der Exzenterantrieb (15) eine
drehbare Scheibe (16) aufweist, deren Rotationsachse
(17) mit der Bohrungsachse (10) des Werkstückes (6)
fluchtet und auf der ein Querschlitten (18) in einer Führungsnut (19) etwa radial verstellbar gehalten ist.

9. Vorrichtung nach Anspruch 8,
   dadurch gekennzeichnet, daß der Mit. ahmerbolzen (14)
   in einer Ausnehmung, vorzugsweise einer mittigen Sacklochbohrung (18') des Querschlittens. (18), axial geführt ist und unter Federkraft in die Ausnehmung (13)
   der Schleifspindel (1) gedrückt ist, und daß sich in
   der Sacklochbohrung (18') des Querschlittens (18) ein
   Ende einer Feder (20) abstützt, deren anderes Ende
   in eine Ausnehmung (14a) des Mitnehmerbolzens (14)
   ragt.

10. Vorrichtung nach einem der Ansprüche 6 bis 8,
    dadurch gekennzeichnet, daß das Werkzeug (2) ein
    Schleifdraht ist, daß eine Abschereinrichtung zum
    automatischen Abtrennen des jeweils abgenutzten Endes
    des Schleifdrahtes (2) und zum Zuführen des Schleifdrahtes (2) zur Schleifspindeleinheit (1) und zum
    automatischen Nachschieben eine Abwickel- und Trans-
    porteinrichtung vorgesehen sind.

aschinenfabrik Gehring
esellschaft mit beschränkter Haftung
Co.Kommanditgesellschaft
ehringstraße 28
302 Ostfildern 2

A 1-86 653/80

05.

0167841

1/1